# EUROPEAN PATENT APPLICATION

(11) **EP 2 015 243 A1**
(43) Date of publication of application: **14.01.2009**
(21) Application number: 07012414.4
(22) Date of filing: 25.06.2007
(51) Int. Cl.: G06Q 30/00

(54) **Pruchase order system**

(71) Applicant: Torkzadeh, Dr., 69412 Eberbach (DE)
(72) Inventor: Torkzadeh, Dr., 69412 Eberbach (DE)

(57) **Abstract**

A purchase order system comprises a display (101) for displaying the plurality of items, a selector (103) for selecting at least one selected item from the displayed plurality of items, a processor (105) for automatically generating a purchase order list comprising information relating to the at least one selected item and a transmitter (107) for transmitting the purchase order list to order the at least one selected item.

## Description

The invention relates to the field of electronic purchase order systems enabling a user to select and order different items from e.g. a menu card in a restaurant, a bistro, a cafe or another gastronomic establishment.

In a typical restaurant scenario, a guest representing a stationary user studies a printed menu card, selects items from the menu card and communicates the selected items to a waiter. Thus, a time instant at which the selected items can be ordered depends on the temporal availability of another person. This conventional ordering approach is, however, expensive and time consuming.

It is therefore the object of the invention to provide a technical concept enabling a stationary user to select and order at least one item from a plurality of items at any time instant.

This object is achieved by the features of the independent claims.

The invention is based on the finding that a stationary user may select and order different items if a stationary electronic system is provided which is assigned to a certain place, e.g. to a table, and which enables the user himself to select items, to set up and to transmit the order. Thus, the user autonomously determines the time instant at which to order and to select items.

The invention provides a purchase order system for ordering at least one item from a plurality of items. Preferably, the purchase order system may be stationary and conjoinable with e.g. a table or the like at a certain position. In another embodiment the purchase order system is designed mobile using a mobile device handed out to a customer or downloading a software to program a mobile phone or another mobile device of a customer. The mobile device may comprise a chargeable battery, which may be charged at a docking station.

The purchase order system comprises a display for displaying the plurality of items and a selector for selecting at least one selected item from the displayed plurality of items. The purchase order system further comprises a processor for automatically generating a purchase order list comprising information relating to the at least one selected item and a corresponding position. For transmitting the purchase order list and ordering the at least one selected item, the purchase order system comprises a transmitter, e.g. a wireless transmitter.

Preferably, the purchase order system is implemented in hardware or in software.

According to an embodiment, the purchase order system comprises a mountable assembly and an attachment element being attachable with the mountable assembly, the attachment element housing the display the selector and the processor, the mountable assembly housing the transmitter. According to a further embodiment, the transmitter is housed in the attachment element. Furthermore, the mountable assembly e.g. provides a supply voltage to the attachment element for supplying the display, the selector, the processor or the transmitter. According to an embodiment, the attachment element is detachable or from the mountable assembly. According to another embodiment, the attachment element is non-detachable.

According to an embodiment, the display and the selector form a touch screen. Thus a user may touch the screen for directly selecting items of interest.

According to an embodiment, the display may further be capable of displaying a picture depicting each item and a text field describing each item, respectively. Therefore, e.g. a picture showing a certain food may be displayed to a user together with text information relating to the corresponding item.

According to an embodiment, the transmitter wirelessly (e.g. according to a WLAN standard or to a Bluetooth standard) transmits the purchase order list upon selection.

According to an embodiment, the purchase order system further comprises an acknowledging element, e.g. a button, for acknowledging the selected item and for acknowledging the transmission. For example the acknowledging element is to be pressed once by the user for acknowledging the selected item or a plurality of the selected items. In order to acknowledge the transmission, the acknowledging element is e.g. to be pressed again. The transmitter preferably transmits the purchase order list upon acknowledgement of the transmission.

According to an embodiment, the purchase order system may be capable of preventing the information, e.g. the items, to the user in different languages. Thus, the display may be configured to display information indicating a plurality of languages which are selectable by a user using the selector. Upon selection, the display may display information relating to the plurality of items in a certain language selected by the user. According to an embodiment, the purchase order system may form an information system or an entertainment system or an infotainment system providing different kind of information to the user. Thus, the display may be configured to display e.g. video information or to playback audio information or present games to the user.

According to an embodiment, the processor may be an integrated processor which may further be programmable. For example, the processor is implemented on a chip.

According to an embodiment, the processor may automatically generate the purchase order list in a portable document format. According to another embodiment the processor may assign the selected items to certain, predefined numbers or characters or signs and to generate a list comprising only the numbers or characters or signs uniquely associated with the selected items.

According to an embodiment, the plurality of items may relate to e.g. a food or a beverage selection.

According to an embodiment, the purchase order system may further comprise a table, wherein the mounting assembly is mounted to the table and wherein the attachment element may be attached with the mounting assembly.

According to an embodiment, the purchase order system further comprises a receiver for receiving and for displaying and/or for printing the purchase order list. Preferably the purchase order system further comprises a central display for displaying several purchase order lists of different positions particularly in a kitchen.

At the position a bill-selector is preferably used for displaying a bill and/or printing a bill at the table.

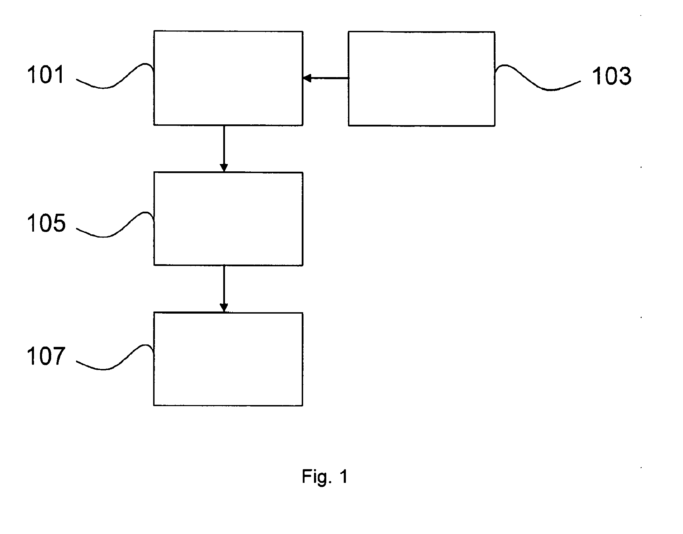

Further embodiments will be described with respect to the accompanying figure 1 showing a block diagram of the purchase order system.

The purchase order system comprises a display 101 and a selector 103 connected to the display 101, wherein, according to an embodiment, the display 101 and the selector 103 may form a touch screen.

A user operating the selector 103 may e.g. highlight one or more items displayed on the display 101 and thus select them. The selected items may be provided e.g. upon acknowledgement to a processor 105 which automatically generates a purchase order list comprising one more selected items. Thus, if the selected items relate to a menu then the list may comprise the menu order.

The processor 105 is connected to a transmitter 107 which, e.g. upon acknowledgement, transmits the purchase order list in order to order one or more items which are selected by the user.

If e.g. several users are using the same purchase order system, then each user may be assigned (or may choose) a user-id so that the selected items are user specific. In this case, the purchase order list comprises user specific information related to the selected items by a certain user.

Furthermore, the display may display billing information which may be provided to the processor upon e.g. selecting and acknowledging using the selector 103. The processor may generate a billing list comprising the total amount due to the selection. In case of a plurality of users, the billing list may display user specific amount due to a user specific selection.

Preferably, the purchase order system is used in restaurants for enabling the user or the users to set up and order a menu. Thus, the above mentioned items may represent different foods ans/or different beverages.

## Claims

1. A purchase order system of a gastronomic establishment for ordering at least one item from a plurality of items, the purchase order system comprising:
a display (101) for displaying said plurality of items at a corresponding position (table);
a selector (103) for selecting at least one selected item from said displayed plurality of items;
a processor (105) for automatically generating a purchase order list comprising information relating to said at least one selected item and an identification of said corresponding position (table); and
a transmitter (107) for transmitting said purchase order list to order said at least one selected item.

2. The purchase order system according to claim 1, further comprising a mountable assembly and an attachment element being attachable with the mountable assembly, the attachment element housing the display (101), the selector (103) and the processor (105), the transmitter (107) being housed in the mountable assembly or in the attachment element.

3. The purchase order system according to claim 1 or 2, the display (101) and the selector (103) forming a touch screen.

4. The purchase order system according to anyone of the claims 1 to 3, the display (101) displaying the at least on selected item.

5. The purchase order system according to anyone of the claims 1 to 4, the display (101) displaying a picture depicting each item and a text field describing each item.

6. The purchase order system according to anyone of the claims 1 to 5, the transmitter (107) wirelessly transmitting the purchase order list upon selection.

7. The purchase order system according to anyone of the claims 1 to 6, further comprising an acknowledging element for acknowledging the selected item and for acknowledging the transmission, the transmitter (107) transmitting the purchase order list upon acknowledgement of the transmission.

8. The purchase order system according to anyone of the claims 1 to 7, the display (101) further displaying information related to plurality of languages being selectable by a user using the selector (103), the display displaying information relating to the plurality of items in a certain language selected by the user.

9. The purchase order system according to anyone of the claims 1 to 8, the display (101) being further configured to display video information or to play back audio information.

10. The purchase order system according to anyone of the claims 1 to 9, the processor (105) automatically generating the purchase order list in a portable document format.

11. The purchase order system according to anyone of the claims 1 to 10, the plurality of items relating to a food selection.

12. The purchase order system according to anyone of the claims 1 to 11, said purchase order system being stationary and particularly further comprising a table, a mounting assembly being mounted to the table and an attachment element being attachable with the mounting assembly.

13. The purchase order system according to anyone of the claims 1 to 12, further comprising a receiver for receiving and displaying the purchase order list.

14. The purchase order system according to anyone of the claims 1 to 13, further comprising a bill-selector (103) for displaying a bill and/or printing a bill.

15. The purchase order system according to anyone of the claims 1 to 14, further comprising a central display for displaying several purchase order lists of different positions particularly in a kitchen.
